# EUROPEAN PATENT SPECIFICATION

(11) **EP 3 351 588 B1**
(45) Date of publication and mention of the grant of the patent: **19.02.2020**
(21) Application number: 17206945.2
(22) Date of filing: 13.12.2017
(51) Int. Cl.: C08K 3/00, C08K 5/00, C08K 5/523, C08L 69/00

(54) **RESIN COMPOSITION EXHIBITING GOOD HEAT RESISTANCE AND INSULATION PROPERTIES, AND PRODUCT USING SAME**
HARZZUSAMMENSETZUNG MIT GUTER WÄRMEBESTÄNDIGKEIT UND ISOLIERUNGSEIGENSCHAFTEN SOWIE PRODUKT DAMIT
COMPOSITION DE RÉSINE PRÉSENTANT UNE BONNE RÉSISTANCE À LA CHALEUR ET DE BONNES PROPRIÉTÉS D'ISOLATION ET PRODUIT ASSOCIÉ

(30) Priority: 30.12.2016 KR 20160184153
(43) Date of publication of application: 25.07.2018
(73) Proprietor: Lotte Advanced Materials Co., Ltd., Jeollanam-do 59616 (KR)
(72) Inventor: JEONG, HyukJin, 16073 Uiwang-si, Gyeonggi-do (KR); KIM, Myeonghwan, 16073 Uiwang-si, Gyeonggi-do (KR); SHIN, Seungshik, 16073 Uiwang-si, Gyeonggi-do (KR)
(74) Representative: Michalski Hüttermann & Partner Patentanwälte mbB

(56) References cited:
- WO-A1-03/022928
- WO-A1-2004/007611
- WO-A1-2004/016691
- WO-A1-2006/070982
- KR-A- 20030 047 384
- KR-A- 20030 048 191
- KR-A- 20040 058 809
- US-A1- 2015 322 260

## Description

### CROSS-REFERENCE TO RELATED APPLICATION

This application claims priority to and the benefit of Korean Patent Application No. 10-2016-0184153 filed in the Korean Intellectual Property Office on December 30, 2016.

US 2015/322260 A1 refers to a flame-retardant thermoplastic resin composition and a molded product thereof, the composition including polycarbonate resin, rubber modified aromatic vinyl copolymer, aromatic phosphate ester compound, glass fiber, and carbon fiber, wherein the composition includes a weight ratio of the glass fiber to the carbon fiber of about 1:0.3 to about 1:2.

WO 2004/007611 A1 refers to a flame retardant thermoplastic resin composition that comprises (A) 45-95 parts by weight of a polycarbonate resin; (B) 1-50 parts by weight of a rubber modified vinyl graft copolymer; (C) 0-50 parts by weight of a vinyl copolymer; (D) 1-30 parts by weight of a mixture of organic phosphorous compounds consisting of (d1) 1-50 % by weight of a oligomeric compound of cyclic phosphazene and (d2) 99-50 % by weight of an oligomeric phosphoric acid ester compound, per 100 parts by weight of the sum of (A), (B) and (C); and (E) 0.05-5 parts by weight of a fluorinated polyolefin resin per 100 parts by weight of the sum of (A), (B) and (C).

WO 2004/016691 A1 refers to a flame retardant thermoplastic resin composition that comprises (A) 45 ∼ 95 parts by weight of a thermoplastic polycarbonate resin; (B) 1 ∼ 50 parts by weight of a vinyl graft copolymer; (C) 0 ∼ 50 parts by weight of a vinyl copolymer or a mixture of vinyl copolymers; (D) 1 ∼ 30 parts by weight of a mixture of organic phosphorous compounds consisting of (D-1) 5 -95 parts by weight of a monomeric phosphoric acid ester compound or a mixture of monomeric phosphoric acid ester compounds and (D-2) 95 ∼ 5 parts by weight of an oligomeric phosphoric acid ester compound or a mixture of oligomeric phosphoric acid ester compounds, per 100 parts by weight of the sum of (A), (B) and (C); and (E) 0.05 ∼ 5 parts by weight of a fluorinated polyolefin resin per 100 parts by weight of the sum of (A), (B) and (C).

KR 2003 0047384 A refers to a thermoplastic resin composition that comprises 100 parts by weight of a resin component; 1-30 parts by weight of a mixture of organic phosphorus-based compounds comprising 5-95 parts by weight of the phosphoric acid ester morpholide compound of the formula 2 and 5-95 parts by weight of the phosphoric acid ester-based oligomer of the formula 3; and 0.05-5 parts by weight of a fluorinated polyolefin-based resin having an average particle size of 0.05-1,000 micrometers and a density of 1.2-2.3 g/cm3, wherein R1, R2, R3, R5 and R6 are independently an aryl group of C6-C20 or an alkyl-substituted aryl group of C6-C20; n has an average number of 0.3-5; and R4 is a group derived from the bisphenol A represented by the formula 4. The resin component comprises 45-95 parts by weight of a thermoplastic polycarbonate resin; 1-50 parts by weight of a rubber modified vinyl-based graft copolymer obtained by graft polymerizing (b1) 5-95 parts by weight of a monomer mixture comprising 50-95 parts by weight of styrene, α-methylstyrene, halogen or alkyl-substituted styrene, C1-C8 methacrylic acid alkyl ester, C1-C8 acrylic acid alkyl ester or their mixtures and 5-50 parts by weight of acrylonitrile, methacrylonitrile, C1-C8 methacrylic acid alkyl ester, C1-C8 acrylic acid alkyl ester, maleic anhydride, C1-C4 alkyl or phenyl N-substituted maleimide or their mixtures, onto (b2) 5-95 parts by weight of at least one selected from the group consisting of butadiene rubber, acryl rubber, ethylene-propylene rubber, styrene-butadiene rubber, acrylonitrile-butadiene rubber, isoprene rubber, ethylene-propylene-diene terpolymer and polyorganosiloxane-polyalkyl(meth)-acrylate rubber composite; and 0-50 parts by weight of a vinyl-based copolymers or their mixture obtained by copolymerizing (c1) 50-95 parts by weight of styrene, α-methylstyrene, halogen or alkyl-substituted styrene, C1-C8 methacrylic acid alkyl ester, C1-C8 acrylic acid alkyl ester or their mixtures and (c2) 5-50 parts by weight of acrylonitrile, methacrylonitrile, C1-C8 methacrylic acid alkyl ester, C1-C8 acrylic acid alkyl ester, maleic anhydride, C1-C4 alkyl or phenyl N-substituted maleimide or their mixtures.

WO 2006/070982 A1 refers to a lame retardant polycarbonate resin composition that comprises (A) 45-95 parts by weight of a thermoplastic polycarbonate resin; (B) 1-50 parts by weight of a rubber modified vinyl-grafted copolymer; (C) 0-50 parts by weight of a vinyl copolymer; (D) 1-30 parts by weight of an organophosphorus compound consisting of (d) 1-75 % by weight of a phosphonate compound having a specific structure; and (d) 25-99 % by weight of an oligomeric phosphate ester compound per 100 parts by weight of the sum of (A), (B) and (C); and (E) 0.05-5 parts by weight of a fluorinated polyolefin resin per 100 parts by weight of the sum of (A), (B) and (C).

KR 2003 0048191 A refers to a flame retardant thermoplastic resin composition and a molded product prepared by using the composition are provided, to improve the flame retardancy, the heat resistance, the hot water resistance, the impact resistance, the stress cracking resistance, the heat stability and the workability.

KR 2004 0058809 A refers to a polycarbonate resin composition comprises: 45-60wt% of linear polycarbonate resin(A); 15-30wt% of a branched polycarbonate resin(B); 5-50wt% of a grafted copolymer resin(C) which contains a rubber-modified styrene; 1-30wt% of a copolymer containing styrene; and, based on 100pts.wt of the total weight of (A), (B), (C) and (D) which constitute a base resin, 5-20 pts.wt of a phosphoric ester compound(E) and 0.1-2.0pts.wt of a fluorinated polyolefin resin(F).

WO 03/022928 A1 refers to a flame retardant polycarbonate thermoplastic resin composition that comprises a polycarbonate resin, a rubber modified vinyl-grafted copolymer, a phosphorous mixture of a cyclic phosphazene oligomer compound and a phosphate ester morpholide compound as a flame retardant, and a fluorinated polyolefin resin, which has good flame retardancy, heat resistance, mechanical strength, impact strength, heat stability, processability, and appearance.

### TECHNICAL BACKGROUND

### (a) Technical Field

The present disclosure relates to a resin composition exhibiting excellent heat resistance and insulation properties and article manufactured using the same.

### (b) Description of the Related Art

A polycarbonate resin is an engineering plastic having excellent mechanical strength, high heat resistance, transparency, and the like, and therefore may be a resin used in various fields such as office automation devices, electric/electronic parts, architectural materials, and the like.

In particular, the polycarbonate resin used for housing electric/electronic parts is required of excellent insulation properties and heat resistance as well as high flame retardancy and impact resistance.

In general, in order to improve the flame retardancy of the polycarbonate resin, a bisphenol A phosphoric acid ester-based flame retardant and the like may be for example used. However, the flame retardancy may be improved, but the heat resistance and insulation properties may be sharply deteriorated.

Accordingly, development of a new resin composition having improved insulation properties and heat resistance as well as excellent flame retardancy and impact resistance is required.

### SUMMARY

An example embodiment provides a resin composition having improved insulation properties and heat resistance as well as improved flame retardancy and impact resistance.

Another embodiment provides an article manufactured from the resin composition.

A resin composition exhibiting excellent heat resistance and insulation properties according to an example embodiment includes (A) a polycarbonate resin, (B) a vinyl-based copolymer, (C) a fluorinated polyolefin, and (D) a phosphorus-based flame retardant, wherein the phosphorus-based flame retardant is biphenyl-4,4'-diyl tetraphenyl bis(phosphate), wherein the polycarbonate resin includes (A-1) a first polycarbonate resin and (A-2) a second polycarbonate resin having a different weight average molecular weight, wherein a weight average molecular weight of the first polycarbonate resin (A-1) ranges from 25,000 g/mol to 32,000 g/mol, and a weight average molecular weight of the second polycarbonate resin (A-2) ranges from 20,000 g/mol to 25,000 g/mol, and wherein the polycarbonate resin includes 25 wt% to 65 wt% of the first polycarbonate resin (A-1), and 35 wt% to 75 wt% of the second polycarbonate resin (A-2) based on 100 wt%.

The phosphorus-based flame retardant (D) is biphenyl-4,4'-diyl tetraphenyl bis(phosphate).

The resin composition exhibiting good heat resistance and insulation properties may include 65 wt% to 94 wt% of the polycarbonate resin (A), 1 wt% to 20 wt% of the vinyl-based copolymer (B), 0.01 wt% to 2 wt% of the fluorinated polyolefin (C), and 1.5 wt% to 15 wt% of the phosphorus-based flame retardant (D) represented by biphenyl-4,4'-diyl tetraphenyl bis(phosphate) based on a total amount of the resin composition exhibiting good heat resistance and insulation properties.

The polycarbonate resin may include (A-1) a first polycarbonate resin and (A-2) a second polycarbonate resin having a different weight average molecular weight.

A weight average molecular weight of the first polycarbonate resin (A-1) may range from 25,000 g/mol to 32,000 g/mol and a weight average molecular weight of the second polycarbonate resin (A-2) may range from 20,000 g/mol to 25,000 g/mol.

The polycarbonate resin may include 25 wt% to 65 wt% of the first polycarbonate resin (A-1) and 35 wt% to 75 wt% of the second polycarbonate resin (A-2) based on 100 wt% of the polycarbonate resin.

The vinyl-based copolymer may include at least one of (B-1) a rubber modified vinyl-based graft copolymer, (B-2) a rubber modified vinyl-based graft copolymer grafted with a (meth)acrylic acid ester compound and (B-3) an aromatic vinyl compound-vinyl cyanide compound copolymer.

The rubber modified vinyl-based graft copolymer may be an acrylonitrile-butadiene-styrene graft copolymer (g-ABS).

The rubber modified vinyl-based graft copolymer grafted with a (meth)acrylic acid ester compound may be a methylmethacrylate-butadiene-styrene copolymer (MBS).

The aromatic vinyl compound-vinyl cyanide compound copolymer may be a styrene-acrylonitrile copolymer (SAN).

According to an example embodiment, an article using resin composition exhibiting good heat resistance and insulation properties is provided.

The article may have a comparative tracking index (CTI) of 0 to 2 measured according to ASTM D3638-12.

The resin composition according to an example embodiment and an article manufactured using the same may have improved insulation properties and heat resistance as well as improved flame retardancy and impact resistance.

As used herein, when a definition is not otherwise provided, "substituted" refers to replacement of at least one hydrogen of a compound by a C1 to C30 alkyl group; a C1 to C10 alkylsilyl group; a C3 to C30 cycloalkyl group; a C6 to C30 aryl group; a C2 to C30 heteroaryl group; a C1 to C10 alkoxy group; a fluoro group, a C1 to C10 trifluoroalkyl group such as a trifluoromethyl group; or a cyano group.

As used herein, when a definition is not otherwise provided, the term "hetero" may refer to one including 1 to 3 heteroatoms selected from N, O, S, and P, and remaining carbons in a compound or a substituent.

As used herein, when a definition is not otherwise provided, the term "alkyl group" may refer to a "saturated alkyl group" without an alkene group or an alkyne group; or an "unsaturated alkyl group" including at least one of an alkene group and an alkyne group. The term "alkene group" may refer to a substituent in which at least two carbon atoms are bound with at least one carbon-carbon double bond, and the term "alkynyl group" refers to a substituent in which at least two carbon atoms are bound with at least one carbon-carbon triple bond. The alkyl group may be a branched, linear, or cyclic alkyl group.

The alkyl group may be a C1 to C20 alkyl group, specifically a C1 to C6 lower alkyl group, a C7 to C10 middle alkyl group, or a C11 to C20 higher alkyl group.

The term "aromatic" may refer to a compound including a cyclic structure where all elements have p-orbitals which form conjugation. Specific examples thereof may be aryl group and a heteroaryl group.

The term "aryl group" may refer to a monocyclic or fused ring-containing polycyclic (i.e., rings sharing adjacent pairs of carbon atoms) groups.

The "heteroaryl group" may refer to one including 1 to 3 heteroatoms selected from N, O, S, or P in aryl group, and remaining carbons. When the heteroaryl group is a fused ring, each ring may include 1 to 3 heteroatoms.

As used herein, when specific definition is not otherwise provided, (meth)acrylate refers to acrylate or methacrylate. In addition, a (meth)acrylic acid alkyl ester refers to an acrylic acid alkyl ester or a methacrylic acid alkyl ester and a (meth)acrylic acid ester refers to an acrylic acid ester or a methacrylic acid ester.

As used herein, when a definition is not otherwise provided, "copolymerization" may refer to block copolymerization, random copolymerization, graft copolymerization, or alternate copolymerization and "a copolymer" may refer to a block copolymer, a random copolymer, a graft copolymer, or an alternate copolymer.

According to an example embodiment, a resin composition exhibiting good heat resistance and insulation properties includes (A) a polycarbonate resin, (B) a vinyl-based copolymer, (C) a fluorinated polyolefin, and (D) a phosphorus-based flame retardant, wherein the phosphorus-based flame retardant is biphenyl-4,4'-diyl tetraphenyl bis(phosphate), wherein the polycarbonate resin includes (A-1) a first polycarbonate resin and (A-2) a second polycarbonate resin having a different weight average molecular weight, wherein a weight average molecular weight of the first polycarbonate resin (A-1) ranges from 25,000 g/mol to 32,000 g/mol, and a weight average molecular weight of the second polycarbonate resin (A-2) ranges from 20,000 g/mol to 25,000 g/mol, and wherein the polycarbonate resin includes 25 wt% to 65 wt% of the first polycarbonate resin (A-1), and 35 wt% to 75 wt% of the second polycarbonate resin (A-2) based on 100 wt%..

Hereinafter, each component of the resin composition exhibiting good heat resistance and insulation properties is specifically described.

### (A) Polycarbonate Resin

In an example embodiment, the polycarbonate resin is a polyester having a carbonate bond, is not particularly limited, and may be any polycarbonate that is usable in a field of a resin composition.

For example, the polycarbonate resin may be prepared by reacting diphenols represented by Chemical Formula 2 with phosgene, halogenic acid ester, carbonate ester, or a combination thereof. 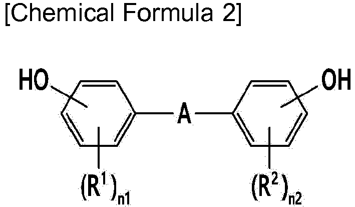 In Chemical Formula 2,
A is a linking group selected from a single bond, a substituted or unsubstituted C1 to C30 alkylene group, a substituted or unsubstituted C2 to C5 alkenylene group, a substituted or unsubstituted C2 to C5 alkylidene group, a substituted or unsubstituted C1 to C30 haloalkylene group, a substituted or unsubstituted C5 to C6 cycloalkylene group, a substituted or unsubstituted C5 to C6 cycloalkenylene group, a substituted or unsubstituted C5 to C10 cycloalkylidene group, a substituted or unsubstituted C6 to C30 arylene group, a substituted or unsubstituted C1 to C20 alkoxylene group, a halogenic acid ester group, a carbonate ester group, CO, S, and SO₂, R¹ and R² are independently a substituted or unsubstituted C1 to C30 alkyl group or a substituted or unsubstituted C6 to C30 aryl group, and n1 and n2 are independently an integer ranging from 0 to 4.

Two or more kinds of the diphenols represented by Chemical Formula may be combined to constitute a repeating unit of a polycarbonate resin.

Specific examples of the diphenols may be hydroquinone, resorcinol, 4,4'-dihydroxydiphenyl, 2,2-bis(4-hydroxyphenyl)propane (referred to as 'bisphenol-A'), 2,4-bis(4-hydroxyphenyl)-2-methylbutane, bis(4-hydroxyphenyl)methane, 1,1-bis(4-hydroxyphenyl)cyclohexane, 2,2-bis(3-chloro-4-hydroxyphenyl)propane, 2,2-bis(3-methyl-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxyphenyl)ketone, bis(4-hydroxyphenyl)ether, and the like. Among the diphenols, 2,2-bis(4-hydroxyphenyl)propane, 2,2-bis(3-methyl-4-hydroxyphenyl)propane, 2,2-bis(3,5-dimethyl-4-hydroxyphenyl)propane, 2,2-bis(3,5-dichloro-4-hydroxyphenyl)propane, or 1,1-bis(4-hydroxyphenyl)cyclohexane may be preferably used. 2,2-bis(4-hydroxyphenyl)propane may be more preferably used.

The polycarbonate resin may be a mixture of copolymers obtained using two or more dipenols that differ from each other.

In addition, the polycarbonate resin may be a linear polycarbonate resin, a branched polycarbonate resin, a polyestercarbonate copolymer resin, and the like.

Specific examples of the linear polycarbonate resin may be a bisphenol-A polycarbonate resin. Specific examples of the branched polycarbonate resin may be a polymer prepared by reacting a multi-functional aromatic compound such as trimellitic anhydride, trimellitic acid, and the like with diphenols and a carbonate. The polyester carbonate copolymer resin may be prepared by reacting bifunctional carboxylic acid with diphenols and carbonate, wherein the used carbonate is diaryl carbonate such as diphenyl carbonate or ethylene carbonate.

The polycarbonate resin may be included in an amount of 65 wt% to 94 wt%, for example 70 wt% to 93 wt% based on a total amount of the resin composition exhibiting good heat resistance and insulation properties of the present disclosure. When the amount of the polycarbonate resin is less than 65 wt%, appearance characteristics, mechanical strength and heat resistance characteristics are unfavorable while when it is greater than 94 wt%, fluidity may be reduced.

Herein, the polycarbonate resin may include (A-1) a first polycarbonate resin and (A-2) a second polycarbonate resin having a different weight average molecular weight.

A weight average molecular weight of the first polycarbonate resin (A-1) may range from 25,000 g/mol to 32,000 g/mol and a weight average molecular weight of the second polycarbonate resin (A-2) may range from 20,000 g/mol to 25,000 g/mol.

In addition, the polycarbonate resin may include 25 wt% to 65 wt% of the first polycarbonate resin (A-1) and 35 wt% to 75 wt% of the second polycarbonate resin (A-2) based on 100 wt% of the polycarbonate resin.

When the weight average molecular weights and amounts of the first and second polycarbonate resins are within the ranges respectively, the resin composition exhibiting good heat resistance and insulation properties may have excellent impact resistance. In addition, the polycarbonate resin may have desirable fluidity by mixing the first and second polycarbonates having each of weight average molecular weights.

### (B) Vinyl-based Copolymer

The resin composition exhibiting good heat resistance and insulation properties according to an example embodiment may include a vinyl-based copolymer. The vinyl-based copolymer may improve impact resistance of the resin composition exhibiting good heat resistance and insulation properties. Such a vinyl-based copolymer may include for example at least one of a rubber modified vinyl-based graft copolymer, a rubber modified aromatic vinyl-based copolymer, and an aromatic vinyl compound-vinyl cyanide compound copolymer.

In addition, an amount of the vinyl-based copolymer may be 1 wt% to 20 wt% or 3 wt% to 15 wt% based on a total amount of the resin composition exhibiting good heat resistance and insulation properties. When the amount of the vinyl-based copolymer is greater than or equal to 1 wt%, improved impact resistance may be ensured and when it is less than or equal to 20 wt%, flame retardancy and thermal stability may be ensured.

Such a vinyl-based copolymer may be used alone or in a mixture of two or more.

Hereinafter, examples of the vinyl-based copolymer may be specifically described.

### (B-1) Rubber Modified Vinyl-based Graft Copolymer

The rubber modified vinyl-based graft copolymer (B-1) may be a rubbery polymer selected from a butadiene rubber, a styrene/butadiene rubber, an acrylonitrile/butadiene rubber, an isoprene rubber, an ethylene/propylene rubber, an ethylene-propylene-diene terpolymer (EPDM) rubber, and a polyorganosiloxane/polyalkyl(meth)acrylate rubber which is grafted with an aromatic vinyl-based monomer and a monomer copolymerizable with the aromatic vinyl-based monomer.

For example, an amount of the rubbery polymer may be 5 wt% to 65 wt%, for example 10 wt% to 60 wt%, and specifically 20 wt% to 50 wt% of the rubber modified vinyl-based graft copolymer entire weight (100 wt%). When the rubbery polymer satisfies the amount ranges, the resin composition exhibiting good heat resistance and insulation properties according to an example embodiment may have improved impact resistance, mechanical properties and the like.

An average particle diameter of the rubbery polymer may range from 0.1 µm to 10 µm in order to improve impact resistance and surface characteristics of an article using the same. For example, the average particle diameter of the rubbery polymer may range from 0.15 µm to 6 µm, for example, 0.15 µm to 4 µm, for example, 0.25 µm to 3.5 µm. Within the ranges, the resin composition may ensure excellent impact strength.

The aromatic vinyl-based monomer may be graft-copolymerized on the rubbery copolymer and may be for example, styrene, styrene substituted with a C1 to C10 alkyl group, halogen substituted styrene, or a combination thereof. For example, the aromatic vinyl-based monomer may be o-ethyl styrene, m-ethyl styrene, p-ethyl styrene, α-methyl styrene, and the like, but is not limited thereto, and may be used alone or in a mixture of two or more.

An amount of the aromatic vinyl-based monomer may be 15 wt% to 94 wt%, for example, 20 wt% to 80 wt%, for example, 30 wt% to 60 wt% based on a total weight of the rubber modified vinyl-based graft copolymer (B-1). When the aromatic vinyl-based monomer satisfies the amount ranges, impact resistance, mechanical properties, and the like may be improved.

The monomer copolymerizable with the aromatic vinyl-based monomer may be for example a vinyl cyanide-based monomer such as acrylonitrile, methacrylonitrile, ethacrylonitrile, phenylacrylonitrile, α-chloroacrylonitrile, fumaronitrile, and the like, and may be used alone or in a mixture of two or more.

An amount of the vinyl cyanide-based monomer may be 1 wt% to 20 wt%, for example 5 wt% to 15 wt% based on a total weight of the rubber modified vinyl-based graft copolymer (B-1). When the vinyl cyanide-based monomer is included within the ranges, excellent impact resistance and heat resistance may be obtained.

The rubber modified vinyl-based graft copolymer according to an example embodiment may be prepared by a polymerization method of emulsion polymerization, suspension polymerization, bulk polymerization, or a combination thereof.

For example, the rubber modified vinyl-based graft copolymer prepared by the above method may be for example an acrylonitrile-butadiene-styrene (ABS) graft copolymer.

An amount of the rubber modified vinyl-based graft copolymer (B-1) may be 1 wt% to 6 wt%, and specifically 2 wt% to 5 wt% based on a total amount of the resin composition. The resin composition including the rubber modified vinyl-based graft copolymer within the ranges exhibits excellent impact resistance and heat resistance.

### (B-2) Rubber Modified Vinyl-based Graft Copolymer Grafted with (Meth)acrylic Acid Ester Compound

The rubber modified vinyl-based graft copolymer grafted with a (meth)acrylic acid ester compound (B-2) may be a core-shell type copolymer wherein the core is a rubbery polymer and the shell is an aromatic vinyl-based compound, a (meth)acrylic acid ester compound, and a copolymer thereof.

The polymerization may be any method publicly known in the related art without any particular limit, for example, a massive polymerization, a suspension polymerization, an emulsion polymerization, and the like.

For example, the (B-2) copolymer may be prepared by graft-polymerizing 40 wt% to 60 wt% of a mixture of an aromatic vinyl-based compound and a (meth)acrylic acid ester compound under a presence of 40 wt% to 60 wt% of a rubbery polymer using an emulsion polymerization method. When the mixture of the rubbery polymer, the aromatic vinyl-based compound, and the (meth)acrylic acid ester compound is used within the range, excellent impact resistance, heat resistance, and the like of the resin composition may be obtained.

Herein, the rubbery polymer may form a core layer. The rubbery polymer may have an average particle diameter ranging from 200 nm to 400 nm. When the rubbery polymer has an average particle diameter of less than 200 nm, impact resistant characteristics may be deteriorated, but when the rubbery polymer has an average particle diameter of greater than 400 nm, workability may be deteriorated.

According to an example embodiment of the present disclosure, the rubbery polymer may be one or a mixture of two or more selected from a polybutadiene rubber, an acryl-based rubber, an ethylene/propylene rubber, a styrene/butadiene rubber, an acrylonitrile/butadiene rubber, a polyisoprene rubber, an ethylene-propylene-diene terpolymer (EPDM), and a polyorganosiloxane/polyalkyl(meth)acrylate rubber composite. More specifically, the polybutadiene rubber may be used.

On the other hand, the aromatic vinyl-based compound that forms the shell may be one or more selected from styrene, C1-C10 alkyl substituted styrene, halogen substituted styrene, vinyl toluene, vinyl naphthalene, and a combination thereof. Specific examples of the alkyl substituted styrene may be α-methyl styrene, p-methyl styrene, o-ethyl styrene, m-ethyl styrene, p-ethyl styrene, p-t-butyl styrene, 2,4-dimethyl styrene, and the like. The aromatic vinyl-based compound may be preferably styrene.

The aromatic vinyl-based compound that forms the shell may be a polymer of (C1-C10) methacrylic acid alkyl esters or (C1-C10) acrylic acid alkyl esters a polymer. More specifically, the (meth)acrylic acid ester compound may be polymethylmethacrylate (PMMA).

A shell layer of the rubber modified vinyl-based graft copolymer grafted with a (meth)acrylic acid ester compound according to an example embodiment of the present disclosure may be formed of a methylmethacrylate-styrene copolymer.

Herein, in the shell layer, each amount of methylmethacrylate and styrene may be for example 70 wt% to 83 wt% and 17 wt% to 30 wt% based on an amount of the methylmethacrylate-styrene copolymer.

The rubber modified vinyl-based graft copolymer grafted with a (meth)acrylic acid ester compound (B-2) of the present disclosure may be for example a methylmethacrylate-butadiene-styrene copolymer (MBS).

An amount of the rubber modified vinyl-based graft copolymer grafted with a (meth)acrylic acid ester compound may be 1 wt% to 15 wt%, for example, 2 wt% to 13 wt% or 3 wt% to 10 wt% based on 100 wt% of the resin composition.

The resin composition including the rubber modified vinyl-based graft copolymer grafted with a (meth)acrylic acid ester compound within the ranges may exhibit improved impact resistance and heat resistance.

### (B-3) Aromatic Vinyl Compound-Vinyl Cyanide Compound Copolymer

The aromatic vinyl compound-vinyl cyanide compound copolymer is formed by copolymerization of a vinyl cyanide compound and an aromatic vinyl compound.

The vinyl cyanide compound may be selected from acrylonitrile, methacrylonitrile, fumaronitrile, and a combination thereof.

The aromatic vinyl compound may be selected from styrene, α-methyl styrene, and a combination thereof which may substituted or unsubstituted with a halogen or a C1 to C10 alkyl group.

The vinyl cyanide compound-aromatic vinyl compound copolymer may be a styrene-acrylonitrile copolymer (SAN).

The aromatic vinyl compound-vinyl cyanide compound copolymer resin may have a weight average molecular weight of 60,000 g/mol to 350,000 g/mol, for example 70,000 g/mol to 180,000 g/mol.

In a resin composition according to an example embodiment, the aromatic vinyl compound-vinyl cyanide compound copolymer resin may be included in an amount of 1 wt% to 12 wt%, specifically, 2 wt% to 7 wt% based on 100 wt% of the resin composition. When the aromatic vinyl compound-vinyl cyanide compound copolymer is included out of the ranges, compatibility with the polycarbonate resin may be deteriorated, and thus heat resistance may be deteriorated.

### (C) Fluorinated Polyolefin

In an example embodiment, the fluorinated polyolefin (C) may be for example a polytetrafluoroethylene resin, a polyfluoroethylene resin, a polyfluoropropylene resin, a polyfluorobutylene resin, polyvinylidene fluoride, a tetrafluoroethylene/vinylidene fluoride copolymer, a tetrafluoroethylene/hexafluoropropylene copolymer, and an ethylene/tetrafluoroethylene copolymer. These may be independently used or different kinds thereof may be mixed.

An amount of the fluorinated polyolefin (C) may be 0.01 wt% to 2 wt%, and more specifically, 0.1 wt% to 1.5 wt% based on a total amount of the resin composition exhibiting good heat resistance and insulation properties. When the amount of the fluorinated polyolefin satisfies the ranges, a resin composition having improved flame retardancy and impact resistance may be obtained.

### (D) Phosphorus-based Flame Retardant

In an example embodiment, the phosphorus-based flame retardant (D) is biphenyl-4,4'-diyl tetraphenyl bis(phosphate).

The phosphorus-based flame retardant (D) may be mixed with another phosphorus-containing flame retardant, for example, phsophonate, phosphazene, and the like.

The phosphorus-based flame retardant (D) represented by biphenyl-4,4'-diyl tetraphenyl bis(phosphate) may be included in an amount of 1.5 wt% to 15 wt%, and more specifically 2 wt% to 13 wt% based on a total amount of the resin composition. When the phosphorus-based flame retardant represented by Chemical Formula 1 is included within the ranges, the resin composition exhibiting good heat resistance and insulation properties according to an example embodiment may improve flame retardancy without deterioration of other properties.

### (E) Additive

The resin composition exhibiting good heat resistance and insulation properties may optionally further include an additive according to its use. The additive may further include an antioxidant, a release agent, a lubricant, a plasticizer, a heat stabilizer, a light stabilizer, or a colorant and two or more may be mixed according to characteristics of final articles.

The antioxidant may suppress or block a chemical reaction of the above resin composition with oxygen and thus prevent decomposition of the resin composition and loss of its inherent properties and include at least one of phenol-type, phosphate-type, thioether-type, or amine-type antioxidants, but is not limited thereto. The antioxidant according to the present embodiment may include a first antioxidant and a second antioxidant.

The release agent improves formability and stability of the resin composition and may be for example a fluorine-containing polymer, silicone oil, a metal salt of stearic acid, a metal salt of montanic acid, a montanic acid ester wax, or a polyethylene wax.

The lubricant lubricates the surface of a metal contacting a resin composition during a molding-extrusion process and thus helps a flow or movement of the resin composition and may be a conventionally-used material.

The plasticizer is used to increase flexibility, process workability, or an expansion property of the resin composition and may be a conventionally-used material.

The heat stabilizer suppresses thermal decomposition of the resin composition when kneaded or molded at a high temperature.

The light stabilizer suppresses or blocks decomposition of the resin composition from ultraviolet (UV) and thus its color change or mechanical property loss and specifically, may include at least one of hindered phenol type, benzophenone type, or benzotriazole type light stabilizers, but is not limited thereto.

The colorant may include a general pigment or dye.

The additive may be included in an amount of 0.01 to 15 parts by weight based on 100 parts by weight of the resin composition exhibiting good heat resistance and insulation properties.

The resin composition exhibiting good heat resistance and insulation properties according to the present disclosure may be prepared in a well-known method of preparing a resin composition. For example, a resin composition exhibiting good heat resistance and insulation properties according to the present disclosure may be manufactured into a pellet by mixing components and other additives simultaneously and melt-kneading the same in an extruder.

Subsequently, an article according to one embodiment of the present disclosure may be formed of the aforementioned resin composition having excellent heat resistance and insulation properties. The resin composition exhibiting excellent heat resistance and insulation properties exhibits excellent flame retardancy, insulation properties, and heat resistance as well as excellent impact resistance and fluidity.

According to another example embodiment of the present disclosure, an article manufactured from the resin composition is provided. The article may be manufactured in various methods publicly known in the related art, for example, a method of injection molding, blow molding, extrusion, and the like by using the resin composition. The article may include parts of various electric and electronic appliances or ejected products having complex shapes but is not limited thereto.

The article exhibits excellent insulation properties and flame retardancy. For example, the article may have a CTI (Comparative Tracking Index) of less than or equal to 2 and be rated in a range of V-0 in an UL94 vertical flame retardant test.

On the other hand, the article may exhibit excellent impact resistance and heat resistance. For example, the article may exhibit a notch Izod impact strength ranging from 60 kgf · cm/cm to 90 kgf · cm/cm at a thickness of 1/8" according to ASTM D256. In addition, a melt flow index according to ASTM D 1238 may be in a range of 25 to 30 under a condition of 250 °C/10 kg and in a range of 10 to 15 under a condition of 220 °C/10 kg. Furthermore, a Vicat softening temperature according to ASTM D1525 may be in a range of 110 °C to 140 °C.

In this way, the resin composition exhibiting excellent heat resistance and insulation properties and an article formed thereof according to the present disclosure exhibits improved heat resistance and insulation properties as well as excellent impact resistance and flame retardancy and thus may be usefully used for exteriors, parts, and the like of various electrical/electronic appliances requiring these characteristics.

### Examples

Hereinafter, the present disclosure is illustrated in more detail with reference to examples and comparative examples. However, the following examples and comparative examples are provided for the purpose of descriptions and the present disclosure is not limited thereto.

The components used for preparing resin compositions in Examples and Comparative Examples are as follows:

### (A) Polycarbonate Resin

(A-1) Bisphenol-A type polycarbonate resin having a weight average molecular weight of 28,000 g/mol (manufacturer: Lotte Advanced Materials Co., Ltd., SC-1080)
(A-2) Bisphenol-A type polycarbonate resin having a weight average molecular weight of 23,000 g/mol (manufacturer: Lotte Advanced Materials Co., Ltd. SC-1190)

### (B) Vinyl-based Copolymer

(B-1) g-ABS wherein 55 wt% of styrene and acrylonitrile (weight ratio: 75/25) are graft-copolymerized on 45 wt% of a butadiene rubber having a Z-average of 310 nm.
(B-2) Rubber modified vinyl-based graft copolymer grafted with a (meth)acrylic acid ester compound: methyl methacrylate-butadiene-styrene copolymer (MBS, manufacturer: Mitsubishi rayon, METABLEN C-223A)
(B-3) SAN resin wherein 82 wt% of styrene and 19 wt% of acrylonitrile are polymerized (weight average molecular weight: 130,000 g/mol).

### (C) Fluorinated Polyolefin

Polytetrafluoroethylene resin (manufacturer: Pacific International, trade name: AD 001)

### (Flame Retardant)

### (D) Phosphorus-based flame retardant represented by biphenyl-4,4'-diyl tetraphenyl bis(phosphate) (manufacturer: Adeca corporation, trade name: FP900, biphenyl-4,4'-diyl tetraphenyl bis(phosphate))

(1) Flame Retardant 1: bisphenol A diphenylphosphate (manufacturer: Daihachi Chemical Industry Co., Ltd., trade name: CR741)
(2) Flame Retardant 2: resorcinol diphenyl phosphate, (manufacturer: Daihachi Chemical Industry Co., Ltd., trade name: CR733S)
(3) Flame Retardant 3: potassium diphenyl sulfone sulfonate, (manufacturer: Arichem, trade name: KSS)
(4) Flame Retardant 4: potassium perfluorobutane sulfonate (manufacturer: 3M, trade name: FR-2025)

### Examples 1 to 4, Comparative Examples 1 to 5, and Reference Example 1

The components were used to prepare each resin composition according to Examples 1 to 4, Comparative Examples 1 to 5, and Reference Example 1 to respectively have the compositions shown in Table 1. According to the manufacturing method, each component was mixed to have the compositions shown in Table 1 and then, extruded with a 45π twin-screw extruder and manufactured into pellets. Herein, the extrusion was performed at 260 °C and RPM of 250 and produced 80 kg/hr of the pellets. The manufactured pellets were injection-molded into specimens by setting a 120 ton injector at an injection temperature of 260 °C and a molding temperature of 60 °C.

**(Table 1)**

| | | Ex. 1 | Ex. 2 | Ex. 3 | Ex. 4 | Comp. Ex. 1 | Comp. Ex. 2 | Comp. Ex. 3 | Comp. Ex. 4 | Comp. Ex. 5 | Ref. Ex. 1 |
|---|---|---|---|---|---|---|---|---|---|---|---|
| PC | (A-1) | 37 | 37 | 57 | 57 | 37 | 37 | 37 | 57 | 57 | 37 |
| | (A-2) | 55.5 | 55.5 | 20.4 | 20.4 | 55.5 | 55.5 | 55.5 | 20.4 | 20.4 | 55.5 |
| (B-1) g-ABS | | 4 | - | 5 | - | 4 | - | - | 5 | 5 | 4 |
| (B-2) MBS | | - | 4 | - | 5 | - | 4 | 4 | - | - | - |
| (B-3) SAN | | - | - | 6 | 6 | - | - | - | 6 | 6 | - |
| (C) PTFE | | 0.6 | 0.6 | 1 | 1 | 0.6 | 0.6 | 0.6 | 1 | 1 | 0.6 |
| Flame retardant | (D) FP900 | 2.3 | 2.3 | 10 | 10 | - | - | - | - | - | 20 |
| | Flame retardant 1 | - | - | - | - | 2.3 | - | - | 10 | - | - |
| | Flame retardant 2 | - | - | - | - | - | - | - | - | 10 | - |
| | Flame retardant 3 | - | - | - | - | - | 0.3 | - | - | - | - |
| | Flame retardant 4 | - | - | - | - | - | - | 0.1 | - | - | - |
| First antioxidant | | 0.1 | 0.1 | 0.1 | 0.1 | 0.1 | 0.1 | 0.1 | 0.1 | 0.1 | 0.1 |
| Second antioxidant | | 0.1 | 0.1 | 0.1 | 0.1 | 0.1 | 0.1 | 0.1 | 0.1 | 0.1 | 0.1 |
| Release agent | | 0.4 | 0.4 | 0.4 | 0.4 | 0.4 | 0.4 | 0.4 | 0.4 | 0.4 | 0.4 |

(unit: wt%)

### Evaluation

Properties of the specimens manufactured in Examples 1 to 4 and Comparative Examples 1 to 5, and Reference Example 1 were evaluated, and the results are shown in Table 3.
(1) Izod impact strength (kgf·cm/cm): measured by equipping 1/8"-thick and 3.2 mm-long Izod specimens with a notch) according to an evaluation method of ASTM D256.
(2) Melt Flow Index (MI): measured under each condition of 250 °C/10 kg or 220 °C/10 kg according to an evaluation method of ASTM D 1238.
(3) Vicat Softening Temperature: measured according to ASTM D1525 and
under a temperature-increasing condition of 5 kgf and 50 °C/hr according to ISO 306/B50.
(4) Flame Retardancy: measured by manufacturing specimens having a size of 125 (w)×12.5 (L)×1.5 (H) mm according to a UL-94 vertical test.
(5) BPT (Ball Pressure Test): performed to measure numerical stability under a stress at a high temperature by passing 3.0 mm specimens through 125°C according to KS C2006-1998, and herein, passing the test is showing excellent numerical stability.
Specifically, when a deep-caved hole having a diameter of less than 2 mm was formed by applying a steel ball having a diameter of 5 mm to the specimens heated up to 125 °C with a static load of 20 ± 4N, 'pass' was given.
(6) CTI (Comparative Tracking Index): obtained by measuring a voltage where 3.0 mm specimens were not carbonized by dropping a NH₄Cl aqueous solution having a concentration of 0.1 wt% one by one up to 50 drops by every 30 second on the surface of the specimens according to ASTM D3638-12. CTI was evaluated according to the measured voltage with a reference to Table 2 and shown in Table 3. The lower CTI is, the more excellent insulating characteristics are obtained.

**(Table 2)**

| Range tracking index (volts) | Assigned PLC |
|---|---|
| 600 ≤ TI | 0 |
| 400 ≤ TI < 600 | 1 |
| 250 ≤ TI < 400 | 2 |
| 175 ≤ TI < 250 | 3 |
| 100 ≤ TI < 175 | 4 |
| 0 ≤ TI < 100 | 5 |

**(Table 3)**

| | | Ex. 1 | Ex. 2 | Ex.3 | Ex. 4 | Comp. Ex. 1 | Comp. Ex. 2 | Comp. Ex. 3 | Comp. Ex. 4 | Comp. Ex. 5 | Ref. Ex. 1 |
|---|---|---|---|---|---|---|---|---|---|---|---|
| IZOD (kgf · cm/cm) | | 75 | 80 | 60 | 65 | 65 | 70 | 70 | 60 | 45 | 21 |
| MI | 250 °C/10kg | 29 | 27 | - | - | 29 | 12 | 12 | - | - | 65 |
| | 220 °C/10kg | -- | - | 12 | 11 | - | - | - | 14 | 16 | - |
| VST (°C) | | 137 | 137 | 115 | 115 | 134 | 141 | 141 | 108 | 105 | 85 |
| UL94 | | V-0 | V-0 | V-0 | V-0 | V-1 | V-1 | V-1 | V-0 | V-0 | V-0 |
| BPT | | pass | pass | pass | pass | pass | pass | pass | pass | fail | fail |
| CTI grade | | 2 | 1 | 1 | 0 | 3 | 3 | 3 | 3 | 3 | 0 |

As shown in Table 3, the resin compositions including a flame retardant represented by Chemical Formula 1 according to Examples 1 to 4 exhibited excellent MI and also exhibited excellent heat resistance, impact strength, flame retardancy, and insulating characteristics. Particularly, high flame retardancy and high insulation properties were obtained.

On the contrary, the resin compositions including bisphenol, resorcinol, and a sulfonic acid metal salt-based flame retardant according to Comparative Examples 1 to 5 exhibited deteriorated flame retardancy and impact resistance or deteriorated insulation properties despite excellent flame retardancy.

On the other hand, a resin composition including the biphenol phosphorus-based flame retardant out of the range of the present disclosure, that is, the resin composition according to Reference Example 1 exhibited excellent flame retardancy and insulation properties but remarkably-deteriorated impact strength and heat resistance characteristics.

In other words, the resin composition according to an example embodiment includes the biphenol phosphorus-based flame retardant represented by Chemical Formula 1 along with the polycarbonate resin, the vinyl-based copolymer, and the fluorinated polyolefin and thus may secure excellent flame retardancy and impact resistance and simultaneously, realize excellent heat resistance and insulation properties.

While this disclosure has been described in connection with what is presently considered to be practical example embodiments, it is to be understood that the disclosure is not limited to the disclosed embodiments.

## Claims

1. A resin composition exhibiting good heat resistance and insulation properties, comprising
(A) a polycarbonate resin;
(B) a vinyl-based copolymer;
(C) a fluorinated polyolefin; and
(D) a phosphorus-based flame retardant, wherein the phosphorus-based flame retardant is biphenyl-4,4'-diyl tetraphenyl bis(phosphate),
wherein the polycarbonate resin includes (A-1) a first polycarbonate resin and (A-2) a second polycarbonate resin having a different weight average molecular weight,
wherein a weight average molecular weight of the first polycarbonate resin (A-1) ranges from 25,000 g/mol to 32,000 g/mol, and
a weight average molecular weight of the second polycarbonate resin (A-2) ranges from 20,000 g/mol to 25,000 g/mol, and
wherein the polycarbonate resin includes 25 wt% to 65 wt% of the first polycarbonate resin (A-1), and 35 wt% to 75 wt% of the second polycarbonate resin (A-2) based on 100 wt%.

2. The resin composition exhibiting good heat resistance and insulation properties of claim 1, wherein based on a total amount of the resin composition exhibiting good heat resistance and insulation properties, said comprises
65 wt% to 94 wt% of the polycarbonate resin (A);
1 wt% to 20 wt% of the vinyl-based copolymer (B);
0.01 wt% to 2 wt% of the fluorinated polyolefin (C); and
1.5 wt% to 15 wt% of the phosphorus-based flame retardant (D).

3. The resin composition exhibiting good heat resistance and insulation properties of claims 1 or claim 2, wherein the vinyl-based copolymer includes
at least one of (B-1) a rubber modified vinyl-based graft copolymer,
(B-2) a rubber modified vinyl-based graft copolymer grafted with a (meth)acrylic acid ester compound, and
(B-3) an aromatic vinyl compound-vinyl cyanide compound copolymer.

4. The resin composition exhibiting good heat resistance and insulation properties of claims 1 to 3, wherein the rubber modified vinyl-based graft copolymer is an acrylonitrile-butadiene-styrene graft copolymer (g-ABS).

5. The resin composition exhibiting good heat resistance and insulation properties of claims 1 to 4, wherein a rubber modified vinyl-based graft copolymer grafted with a (meth)acrylic acid ester compound is a methylmethacrylate-butadiene-styrene copolymer (MBS).

6. The resin composition exhibiting good heat resistance and insulation properties of claims 1 to 5, wherein aromatic vinyl compound-vinyl cyanide compound copolymer is a styrene-acrylonitrile copolymer (SAN).

7. An article manufactured from the resin composition one of claims 1 to 6.

8. The article of claim 7, wherein the article has a comparative tracking index (CTI) of 0 to 2 measured according to ASTM D3638-12.

## Patentansprüche

1. Harzzusammensetzung, die gute Wärmebeständigkeit und Isolationseigenschaften aufweist, umfassend:
(A) ein Polycarbonatharz;
(B) ein Copolymer auf Vinylbasis;
(C) ein fluoriertes Polyolefin; und
(D) einen Flammhemmer auf Phosphorbasis, wobei der Flammhemmer auf Phosphorbasis Biphenyl-4,4'-diyltetraphenylbis(phosphat) ist,
wobei das Polycarbonatharz (A-1) ein erstes Polycarbonatharz und (A-2) ein zweites Polycarbonatharz mit einem anderen gewichtsgemittelten Molekulargewicht enthält,
wobei das gewichtsgemittelte Molekulargewicht des ersten Polycarbonatharzes (A-1) in dem Bereich von 25.000 g/mol bis 32.000 g/mol liegt und
das gewichtsgemittelte Molekulargewicht des zweiten Polycarbonatharzes (A-2) in dem Bereich von 20.000 g/mol bis 25.000 g/mol liegt und
wobei das Polycarbonatharz 25 Gew.-% bis 65 Gew.-% an dem ersten Polycarbonatharz (A-1) und 35 Gew.-% bis 75 Gew.-% an dem zweiten Polycarbonatharz (A-2), bezogen auf 100 %, enthält.

2. Harzzusammensetzung mit guter Wärmebeständigkeit und Isolationseigenschaften gemäß Anspruch 1, wobei, bezogen auf die Gesamtmenge der Harzzusammensetzung mit guter Wärmebeständigkeit und Isolationseigenschaften, diese aufweist,
65 Gew.-% bis 94 Gew.-% an dem Polycarbonatharz (A);
1 Gew.-% bis 20 Gew.-% an dem Copolymer auf Vinylbasis (B);
0,01 Gew.-% bis 2 Gew.-% an dem fluorierten Polyolefin (C); und
1,5 Gew.-% bis 15 Gew.-% an dem Flammhemmer auf Phosphorbasis (D).

3. Harzzusammensetzung, die gute Wärmebeständigkeit und Isolationseigenschaften aufweist, gemäß Anspruch 1 oder Anspruch 2, wobei das Copolymer auf Vinylbasis enthält:
wenigstens eines von (B-1) einem kautschukmodifizierten Pfropfcopolymer auf Vinylbasis,
(B-2) einem kautschukmodifizierten Pfropfcopolymer auf Vinylbasis, das mit einer (Meth)acrylsäureesterverbindung gepfropft ist, und
(B-3) einem aromatische-Vinylverbindung-Vinylcyanidverbindung-Copolymer.

4. Harzzusammensetzung, die gute Wärmebeständigkeit und Isolationseigenschaften aufweist, gemäß Ansprüchen 1 bis 3, wobei das kautschukmodifizierte Pfropfcopolymer auf Vinylbasis ein AcrylnitrilButadien-Styrol-Pfropfcopolymer (g-ABS) ist.

5. Harzzusammensetzung, die gute Wärmebeständigkeit und Isolationseigenschaften aufweist, gemäß Ansprüchen 1 bis 4, wobei ein kautschukmodifiziertes Pfropfcopolymer auf Vinylbasis, das mit einer (Meth)acrylsäureesterverbindung gepfropft ist, ein Methylmethacrylat-Butadien-Styrol-Copolymer (MBS) ist.

6. Harzzusammensetzung, die gute Wärmebeständigkeit und Isolationseigenschaften aufweist, gemäß Ansprüchen 1 bis 5, wobei das aromatische-Vinylverbindung-Vinylcyanidverbindung-Copolymer ein Styrol-Acrylnitril-Copolymer (SAN) ist.

7. Gegenstand, hergestellt aus der Harzzusammensetzung gemäß einem der Ansprüche 1 bis 6.

8. Gegenstand gemäß Anspruch 7, wobei der Gegenstand eine Kriechstromfestigkeit (Comparative Tracking Index, CTI) 0 bis von 2, gemessen gemäß ASTM D3638-12, aufweist.

## Revendications

1. Composition de résine présentant une bonne résistance à la chaleur et de bonnes propriétés d'isolation, comprenant :
(A) une résine de polycarbonate ;
(B) un copolymère à base de vinyle ;
(C) une polyoléfine fluorée ; et
(D) un retardateur de flamme à base de phosphore, le retardateur de flamme à base de phosphore étant le bis(phosphate) de biphényl-4,4'-diyltétraphényle,
dans laquelle la résine de polycarbonate contient (A-1) une première résine de polycarbonate et (A-2) une deuxième résine de polycarbonate ayant une différente masse moléculaire moyenne en poids, d
ans laquelle une masse moléculaire moyenne en poids de la première résine de polycarbonate (A-1) est de 25 000 g/mol à 32 000 g/mol, et
une masse moléculaire moyenne en poids de la deuxième résine de polycarbonate (A-2) est de 20 000 g/mol à 25 000 g/mol, et
dans laquelle la résine de polycarbonate contient 25 % en poids à 65 % en poids de la première résine de polycarbonate (A-1), et de 35 % en poids à 75 % en poids de la deuxième résine de polycarbonate (A-2) relativement à 100 % en poids.

2. Composition de résine présentant une bonne résistance à la chaleur et de bonnes propriétés d'isolation selon la revendication 1, dans laquelle relativement à une quantité totale de la composition de résine présentant une bonne résistance à la chaleur et de bonnes propriétés d'isolation, qui comprend
65 % en poids à 94 % en poids de la résine de polycarbonate (A) ;
1 % en poids à 20 % en poids du copolymère à base de vinyle (B) ;
0,01 % en poids à 2 % en poids de la polyoléfine fluorée (C) ; et
1,5 % en poids à 15 % en poids du retardateur de flamme à base de phosphore (D).

3. Composition de résine présentant une bonne résistance à la chaleur et de bonnes propriétés d'isolation selon la revendication 1 ou la revendication 2, dans laquelle le copolymère à base de vinyle contient au moins l'un de :
(B-1) un copolymère greffé à base de vinyle modifié par caoutchouc,
(B-2) un copolymère greffé à base de vinyle modifié par caoutchouc greffé avec un composé ester d'acide (méth)acrylique, et
(B-3) un copolymère d'un composé de vinyle aromatique et d'un composé de cyanure de vinyle.

4. Composition de résine présentant une bonne résistance à la chaleur et de bonnes propriétés d'isolation selon les revendications 1 à 3, dans laquelle le copolymère greffé à base de vinyle modifié par caoutchouc est un copolymère greffé d'acrylonitrile-butadiène-styrène (g-ABS).

5. Composition de résine présentant une bonne résistance à la chaleur et de bonnes propriétés d'isolation selon les revendications 1 à 4, dans laquelle un copolymère greffé à base de vinyle modifié par caoutchouc greffé avec un composé ester d'acide (méth)acrylique est un copolymère de méthacrylate de méthyle-butadiène-styrène (MBS).

6. Composition de résine présentant une bonne résistance à la chaleur et de bonnes propriétés d'isolation selon les revendications 1 à 5, dans laquelle le copolymère d'un composé de vinyle aromatique et d'un composé de cyanure de vinyle est un copolymère de styrène-acrylonitrile (SAN).

7. Article fabriqué à partir de la composition de résine selon l'une des revendications 1 à 6.

8. Article selon la revendication 7, l'article ayant un indice de résistance au cheminement (IRC) de 0 à 2, mesuré selon ASTM D3638-12.
